# EUROPÄISCHE PATENTSCHRIFT

(11) **EP 1 936 216 B1**
(45) Veröffentlichungstag und Bekanntmachung des Hinweises auf die Patenterteilung: **10.02.2010**
(21) Anmeldenummer: 07014748.3
(22) Anmeldetag: 27.07.2007
(51) Int. Cl.: F16C 29/06, F16C 29/00

(54) **Lineares Wälzlagerelement**
Linear bearing element
Elément de roulement linéaire

(30) Priorität: 21.12.2006 DE 102006060609
(43) Veröffentlichungstag der Anmeldung: 25.06.2008
(73) Patentinhaber: AMK Arnold Müller GmbH & Co.KG, 73230 Kirchheim / Teck (DE)
(72) Erfinder: Müller, Arnold, 73230 Kirchheim/Teck (DE)
(74) Vertreter: Kratzsch, Volkhard

(56) Entgegenhaltungen:
- WO-A-01/31212
- WO-A-99/25983
- DE-A1- 4 210 039
- DE-A1- 4 318 427
- DE-A1- 19 937 278
- DE-A1-102006 014 787
- US-B1- 6 174 086

## Beschreibung

Die Erfindung bezieht sich auf ein lineares Wälzlagerelement mit den Merkmalen im Oberbegriff des Anspruchs 1.

Derartige lineare Wälzlagerelemente werden für lineare Wälzlagerführungen verwendet, bei denen die Wälzlagerelemente zwischen einer Führungsschiene und einem auf der Führungsschiene relativ verschiebbar gelagerten Führungswagen angeordnet sind. Wälzlagerführungen dieser Art sind bekannt und in vielfältigen Ausführungen erhältlich. Sie bestehen aus einem massiven Führungswagen oder Schlitten, der sich mittels der Wälzkörper auf der Führungsschiene relativ zu dieser bewegen lässt. Hierbei werden Anordnungen verwendet, wie sie von Wälzlagern her bekannt sind. Die Laufbahnform hat dabei kreisbogenabschnittförmiges oder gotisches Profil. Bekannt sind vierreihige, sechsreihige oder eine noch größere Anzahl von Reihen aufweisende Systeme. Da die Führungsschiene und der Führungswagen aus massivem Metall, insbesondere Stahl, bestehen, findet bei nicht zentralem Kraftangriff, das heißt bei schräg einwirkenden Lasten, bei Momenten od.dgl., eine Verformung statt, bei der sich unterschiedliche Einfederungen der kugelförmigen Wälzkörper ergeben und ungleichförmige Verformungen des Tragkörpers. Besonders bei niedrigen und schmalen Führungswagenkörpern, die nur einen geringen Querschnitt aufweisen und dadurch nur geringes Abstützmaterial anbieten, kommt es deshalb zu ungleichmäßigem Ablauf und negativen Auswirkungen auf die Lebensdauer. Finden beispielsweise Momentenbelastungen um die Schienenlängsachse statt, so werden die außen liegenden Führungslaufbahnen stark belastet, während die innen liegenden nur zu einem geringeren Teil an der Lastübertragung teilhaben. Es kommt zu starken Verlagerungen der Berührungspunkte. Um dem Rechnung zu tragen, müssen die Laufbahnen der Führungsschiene sehr tief eingeschliffen werden. Dies bedingt hohe Kosten. Außerdem sind die Berührungsflächen nur eingeschränkt nutzbar, weswegen die Wälzlagerführung entweder größer dimensioniert werden muss oder statt dessen die maximale Belastbarkeit reduziert wird, um das Laufverhalten nicht zu sehr zu beeinträchtigen.

Es sind lineare Wälzlagerelemente der eingangs genannten Art bekannt (WO 99/25983 A), bei denen der Tragkörper hinsichtlich der Abstützung um eine Längsachse oder um eine Querachse schwenkbeweglich sein soll ist. Hierzu weist der Tragkörper eine teilzylindrische Außenfläche in Längsrichtung auf mit konvexer Krümmung um eine Längsachse und im Bereich der Längenmitte einen quer gerichteten Vorsprung mit konvexer Krümmung um eine Querachse auf. Die Längsachse verläuft in Querabstand von der Querachse. Beide Achsen schneiden sich nicht. Eine Ausgleichsbewegung kann entweder nur um die Längsachse oder nur um die Querachse erfolgen. Nachteilig hierbei ist, dass die Tragkörper sich relativ zu dem im Führungswagen befindlichen Rücklauf der Wälzkörper verlagern können. Dies führt zu eingeschränkter Laufgüte, erhöhter Geräuschbildung und hat eine relativ starke Belastung der Wälzkörper zur Folge.

Ferner sind lineare Wälzlagerelemente der eingangs genannten Art bekannt aus DE 199 37 278 A1, DE 10 2006 014 787 A1 und DE 42 10 039 A1, bei denen der Tragkörper hinsichtlich der Abstützung um eine Längsachse schwenkbeweglich ist. Der Tragkörper weist hierzu eine teilzylindrische Außenfläche auf, die sich in Längsrichtung erstreckt. Dabei ist die Anordnung so getroffen, dass zwei Wälzkörperkanäle vorgesehen sind mit zwei innerhalb einer gemeinsamen Ebene und in Abstand nebeneinander angeordneten, längsverlaufenden Traglaufbahnen am Tragkörper für tragende Wälzkörper und mit zwei zugeordneten Rücklaufkanälen für rücklaufende Wälzkörper und mit jeweiligen Umlenkkanälen. Auch für diese Wälzlagerelemente ergeben sich die gleichen vorstehend erläuterten Nachteile.

Der Erfindung liegt die Aufgabe zugrunde, ein lineares Wälzlagerelement der eingangs genannten Art zu schaffen, welches einen störungsfreien Umlauf der Wälzkörper ohne stärkere Belastung dieser und eine Geräuscharmut mit einfachen Mitteln ermöglicht.

Die Aufgabe ist bei einem linearen Wälzlagerelement der eingangs genannten Art gemäß der Erfindung durch die Merkmale im Anspruch 1 gelöst. Weitere vorteilhafte Erfindungsmerkmale und Ausgestaltungen eines solchen Wälzlagerelements ergeben sich aus den Unteransprüchen. Es ergeben sich einzelne unabhängige und einbaufertige Laufbahnelemente, bei denen die einzelnen Bahnen in fester und bleibender Zuordnung zueinander stehen. Die Laufbahnelemente beinhalten Tragbahn, Rücklauf und Umlenkung einschließlich der Wälzkörper. Durch diese feste und bleibende Zuordnung entfällt die Gefahr einer etwaigen Verlagerung z.B. der Rücklaufkanäle in Bezug auf die Traglaufbahnen des Tragkörpers. Das Wälzlagerelement arbeitet geräuscharm, verschleißarm mit einhergehender hoher Lebensdauer und ist klein, kompakt und benötigt nur einen geringen Bauraum beim Einbau in eine lineare Wälzlagerführung. Aufgrund der zweiachsigen konvexen oder konkaven kugelabschnittförmigen Krümmung auf der Rückseite des Tragkörpers ist eine selbsttätige Anpassung der Wälzlagerführung an den Verlauf der Laufbahnen der Führungsschiene ermöglicht, wobei eine möglichst gleichmäßige Lastverteilung auf die einzelnen Wälzkörper stattfindet. Dadurch ist erreicht, dass jede Reihe bei jedem Beanspruchungszustand im Wesentlichen gleich beansprucht ist. Ferner ist erreicht, dass durch die seitliche Anordnung der jeweiligen Rücklaufkanäle der Tragkörper hinsichtlich seiner Querschnittsausdehnung klein und kompakt gestaltet werden kann, da dieser hinsichtlich seines Abstützquerschnitts nicht durch im Bereich des Tragkörpers verlaufende Rücklaufkanäle reduziert werden muss. Gleiches gilt auch für den Abstützungsbereich des Führungswagens, an dem sich der Tragkörper abstützt. Auch dieser Abstützquerschnitt muss nicht wegen Anordnung der Rücklaufkanäle reduziert und damit geschwächt werden. Von Vorteil ist, dass somit die Abstützung der Laufbahnelemente über den Rücken der Tragkörper in einem massiven Bereich des Führungswagens erfolgt. Dadurch wird die Steifigkeit einer Wälzlagerführung erhöht. Zugleich wird der Herstellungsaufwand reduziert. Von Vorteil ist ferner, dass die Laufbahnelemente mit einer in Richtung der Führungsschiene wirkenden Federkraft beaufschlagt sind. Dadurch wird erreicht, dass selbst dann, wenn sich auf einer Seite Spiel unter einer Kraftwirkung und einer daraus resultierenden Verlagerung einstellen sollte, das jeweilige Laufbahnelement trotzdem mit den Wälzkörpern an die Führungsschiene gedrückt wird, so dass ein ständiger Kontakt zwischen den Wälzkörpern und den entsprechenden Führungsflächen gewährleistet ist und dadurch etwaige Anflächungen bei den Wälzkörpern vermieden sind. Dies ist insbesondere bei hochdynamischen Antrieben vorteilhaft, da immer sämtliche tragenden Wälzkörper durch den Kontakt mit den Führungsbahnen beschleunigt werden. Es ergibt sich ein Wälzkörperumlauf ohne Schlupf. Damit wird es möglich, die Laufbahnen für die Wälzkörper als Vierpunktlager mit geringem Druckwinkel auszuführen. Auf diese Weise kann die Tragfähigkeit des Wälzkörperkontaktes annähernd verdoppelt werden. Dies führt zu höchst tragfähigen linearen Wälzlagerführungen.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweise auf die Ansprüche darauf Bezug genommen, wodurch jedoch alle diese Anspruchsmerkmale als an dieser Stelle ausdrücklich offenbart zu gelten haben.

Die Erfindung ist nachfolgend anhand von in den Zeichnungen gezeigten Ausführungsbeispielen näher erläutert. Es zeigen:
- Fig. 1: einen schematischen senkrechten Schnitt einer linearen Wälzlagerführung gemäß einem ersten Ausführungsbeispiel, die vier lineare Wälzlagerelemente aufweist,
- Fig. 2: eine Einzelheit II in Fig. 1 in größerem Maßstab,
- Fig. 3: einen schematischen senkrechten Schnitt einer linearen Wälzlagerführung gemäß einem zweiten Ausführungsbeispiel,
- Fig. 4: einen schematischen senkrechten Schnitt einer linearen Wälzlagerführung gemäß einem dritten Ausführungsbeispiel,
- Fig. 5: einen schematischen Schnitt entlang der Linie V - V in Fig. 4,
- Fig. 6: eine schematische stirnseitige Ansicht der linearen Wälzlagerführung in Pfeilrichtung VI in Fig. 5,
- Fig. 7: einen schematischen senkrechten Schnitt einer linearen Wälzlagerführung gemäß einem vierten Ausführungsbeispiel,
- Fig. 8: einen schematischen senkrechten Schnitt einer linearen Wälzlagerführung gemäß einem fünften Ausführungsbeispiel,
- Fig. 9: einen schematischen Schnitt etwa entlang der Linie IX - IX in Fig. 8 eines Teils der dortigen Wälzlagerführung.

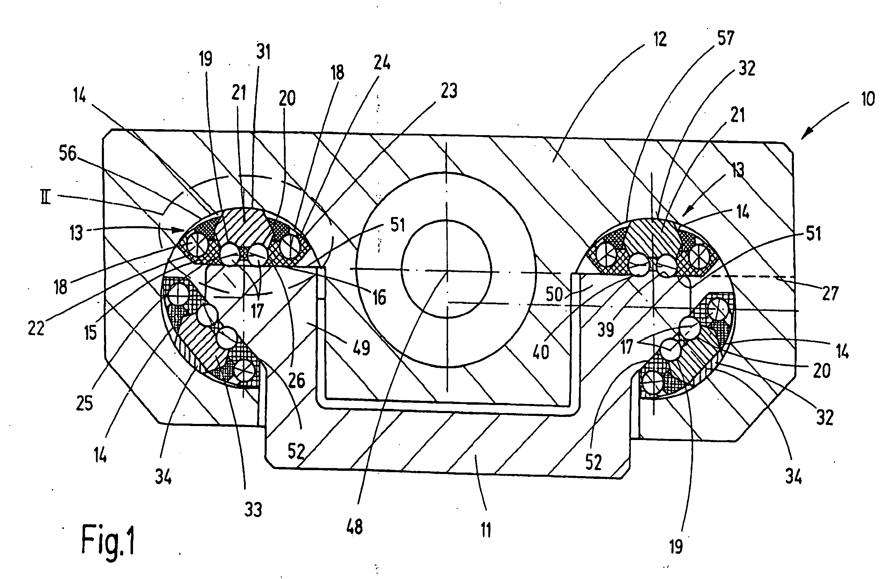

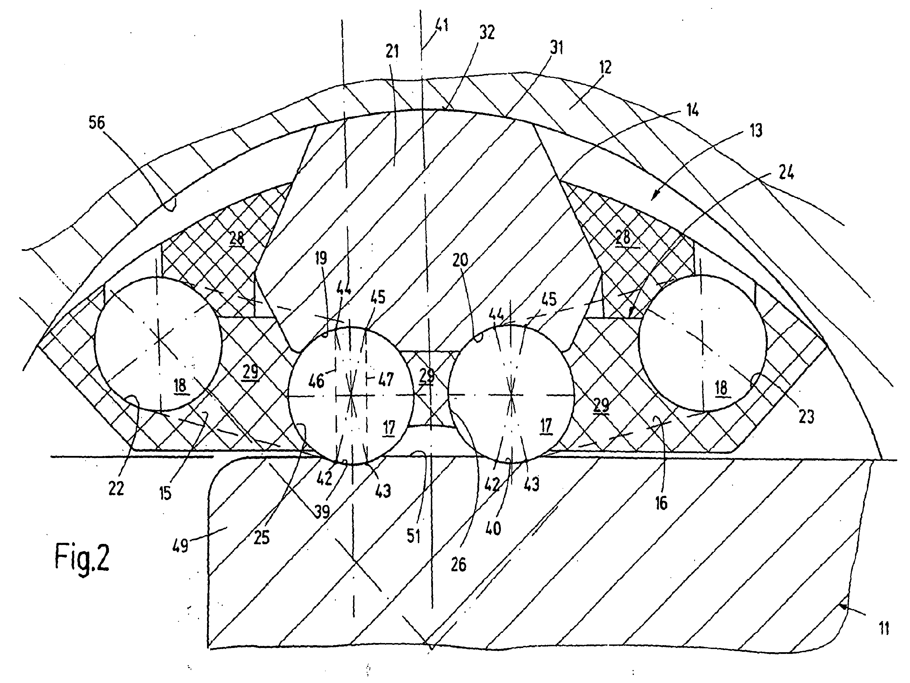

In Fig. 1 und 2 ist schematisch eine lineare Wälzlagerführung 10 mit einem auf einer Führungsschiene 11 relativ verschiebbar gelagerten Führungswagen 12, Schlitten od. dgl. gezeigt, wobei zwischen der Führungsschiene 11 und dem Führungswagen 12 zu dessen Führung mindestens ein lineares Wälzlagerelement 13 in Form eines unabhängigen, einbaufertigen Laufbahnelements 14 angeordnet ist.

Nachfolgend sind zunächst anhand von Fig. 1 bis 9 Besonderheiten dieses mindestens einen Wälzlagerelements 13, insbesondere Laufbahnelements 14, näher erläutert.

Das lineare Wälzlagerelement 13 ist derart gestaltet, dass dieses zwei endlose und im Kanalverlauf stufenlos ineinander übergehende Wälzkörperkanäle 15 und 16 für tragende Wälzkörper 17 und nicht tragende Wälzkörper 18 aufweist. Die Wälzkörper 17, 18 bestehen hier aus Kugeln, die vorzugsweise einen relativ kleinen Kugeldurchmesser haben. Jeder Wälzkörperkanal 15, 16 ist aus einer Traglaufbahn 19 bzw. 20 an einem Tragkörper 21 für die tragenden Wälzkörper 17, aus einem jeweiligen Rücklaufkanal 22 bzw. 23, gebildet mittels eines Käfigelements 24, für die rücklaufenden, nicht tragenden Wälzkörper 18 und aus nicht besonders dargestellten Umlenkkanälen gebildet, wobei die Umlenkkanäle an den beiden axialen Enden des Wälzlagerelements 13 je Wälzkörperkanal 15, 16 dessen Rücklaufkanal 22 bzw. 23 mit der Traglaufbahn 19 bzw. 20 sowie im Inneren des Käfigelements 24 verlaufenden Haltekanälen 25 bzw. 26 stufenfrei miteinander verbinden, so dass die Wälzkörperkanäle 15, 16 jeweils glatt durchlaufende endlose Kanäle darstellen, längs denen die Wälzkörper 17, 18 beweglich sind. Die nicht sichtbaren Umlenkkanäle sind endseitig des jeweiligen Wälzlagerelements 13 mittels Endabdeckungen begrenzt.

Man erkennt, dass jedes Wälzlagerelement 14 zwei Wälzkörperkanäle 15, 16 aufweist und demgemäß zwei Traglaufbahnen 19, 20 am Tragkörper 21 für die tragenden Wälzkörper 17, wobei die beiden Traglaufbahnen 19, 20 innerhalb einer gemeinsamen Ebene 27 und dabei in Abstand nebeneinander angeordnet sind und längs verlaufen. Diesen zwei Traglaufbahnen 19, 20 am Tragkörper 21 sind zwei Rücklaufkanäle 22 bzw. 23 für rücklaufende Wälzkörper 18 und jeweilige Umlenkkanäle an den axialen Enden zugeordnet.

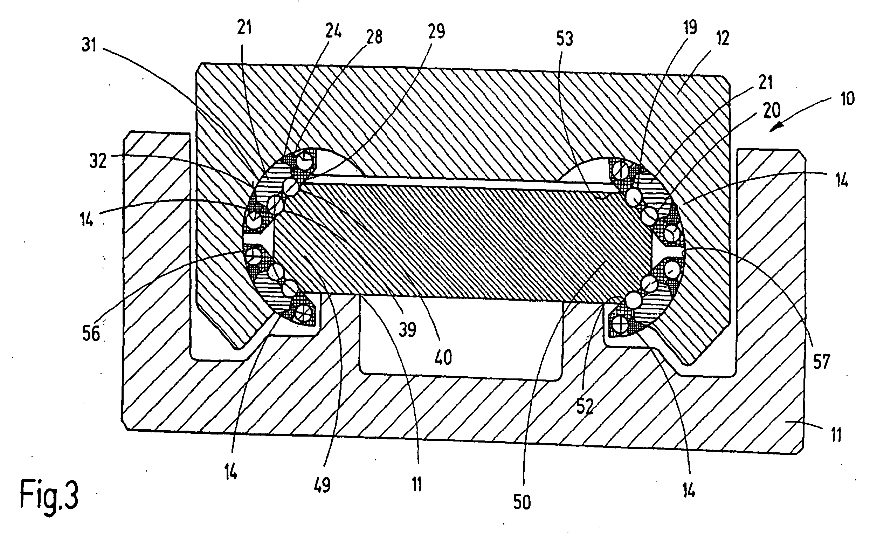

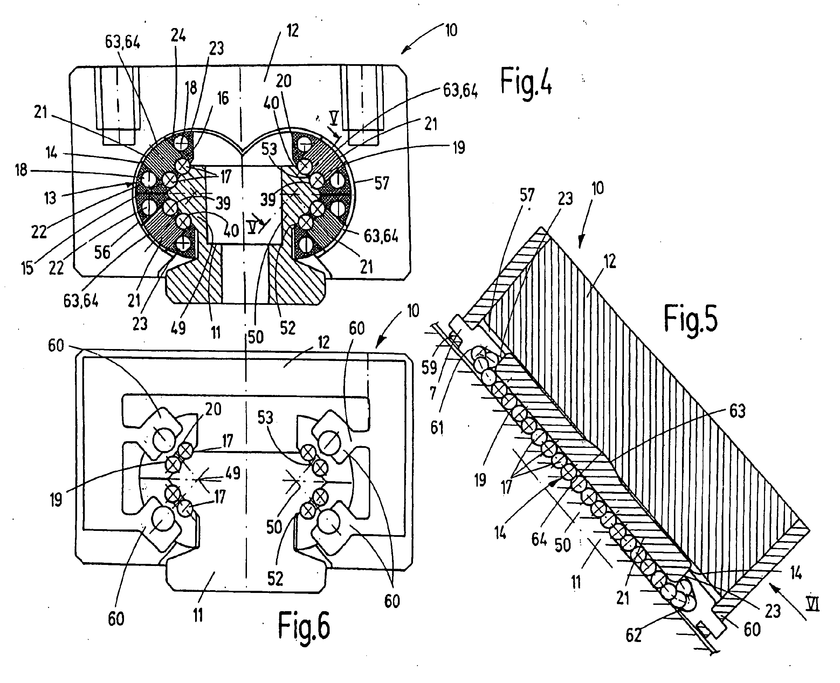

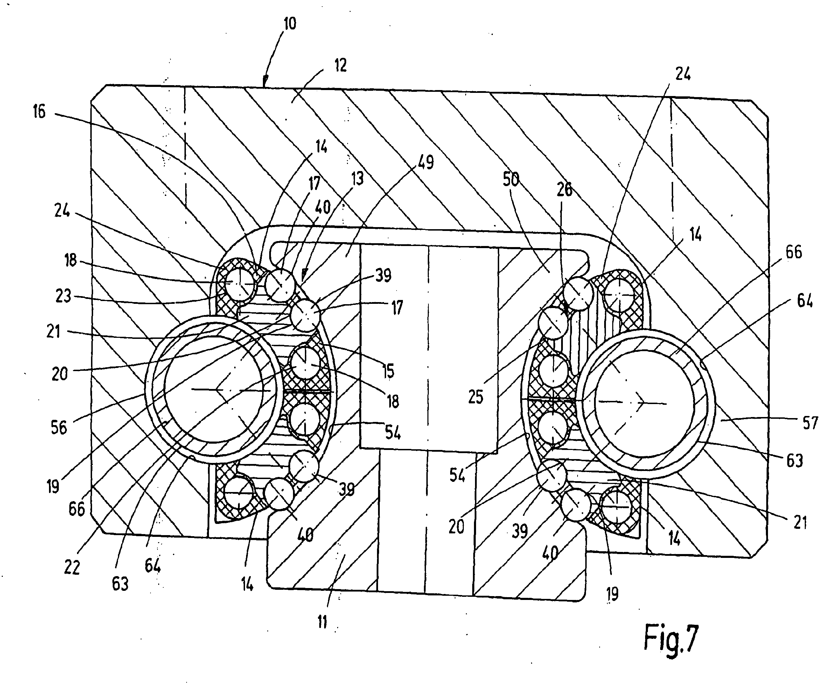

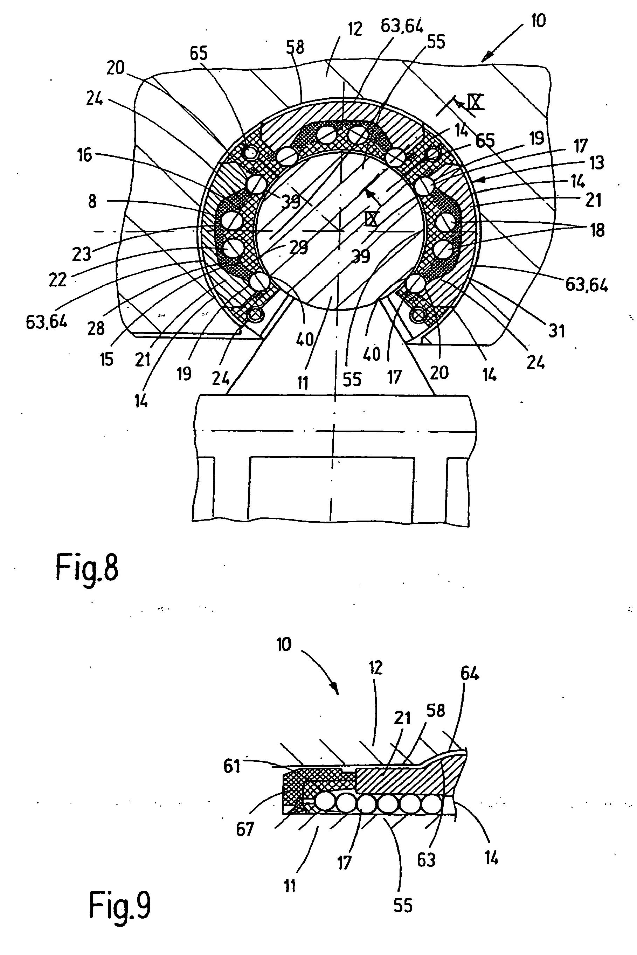

Beim Ausführungsbeispiel gemäß Fig. 1 und 2 ist das Käfigelement 24 zweiteilig ausgebildet. Es besteht aus zwei Käfigteilen 28, 29, die untereinander und mit dem Tragkörper 21 verbunden sind, wobei zwischen den beiden Käfigteilen 28, 29 die jeweiligen beiden Rücklaufkanäle 22, 23 gebildet sind. Die Wälzkörper, insbesondere die tragenden Wälzkörper 17, sind mittels des Käfigelements 24, und zwar des einen Käfigteils 29, unverlierbar in Bezug auf die zwei Traglaufbahnen 19, 20 gehalten. Das Käfigelement 24 besteht aus Kunststoff, während der Tragkörper 21 aus Stahl gebildet ist. Auch beim Ausführungsbeispiel in Fig. 3 und Fig. 8 ist je Laufbahnelement 14 das Käfigelement 24 zweiteilig aus den beiden Käfigteilen 28 und 29 gebildet. Bei dem dritten Ausführungsbeispiel in Fig. 4 bis 6 und beim vierten Ausführungsbeispiel gemäß Fig. 7 hingegen ist ein einteiliges Käfigelement 24 vorgesehen, das dem Tragkörper 21 zugeordnet ist, mit diesem verbunden ist und zwei Rücklaufkanäle 22, 23 enthält.

Der Tragkörper 21 weist beim ersten Ausführungsbeispiel gemäß Fig. 1 und 2 auf seiner den beiden nebeneinander verlaufenden Traglaufbahnen 19, 20 abgewandten Rückseite 31 zumindest eine bei diesem Ausführungsbeispiel konvex gekrümmte Außenfläche 32 auf, wobei sich diese gekrümmte Außenfläche 32 über einen Teil der Länge des Tragkörpers 21 oder über dessen gesamte Länge erstrecken kann. Die Krümmung der Außenfläche 32 verläuft um eine nicht dargestellte Längsachse, die etwa parallel zu den beiden Traglaufbahnen 19, 20 verläuft. Die Außenfläche 32 kann etwa kreisbogenabschnittförmig sein. Statt dieser konvex gekrümmten Außenfläche 32 kann die Rückseite 31 auch konkav gekrümmt sein und hierbei z.B. ebenfalls etwa kreisbogenabschnittförmig verlaufen. Auch kann diese Krümmung auf der Rückseite 31 statt dessen auch zweiachsig, also sphärisch, konkav oder konvex sein, wie dies später noch anhand der Ausführungsbeispiele gemäß Fig. 4 bis 9 näher erläutert ist. Die einachsige konvexe Krümmung der Außenfläche 32 ist so ausgebildet, dass diese eine selbsttätige Einstellung des Laufbahnelements 14 um eine zu den zwei Traglaufbahnen 19, 20 etwa parallele Längsachse und eine gleichmäßige Lastverteilung auf die einzelnen tragenden Wälzkörper 17 ermöglicht. Dies gilt sowohl für die zweiachsige konvexe Krümmung gemäß Fig. 1 und 2 auf der Außenfläche 32 als auch für eine statt dessen konkave Krümmung oder statt dessen zweiachsige, also kugelabschnittförmige, Krümmung entsprechend Fig. 4 bis 9. Bei einer solchen zweiachsigen konvexen oder konkaven Krümmung der Außenfläche 32 ist diese demgemäß so ausgebildet, dass sie eine selbsttätige Einstellung des Laufbahnelements 14 um eine zu den zwei Traglaufbahnen 19, 20 etwa parallele Längsachse und eine zu dieser quer, insbesondere etwa rechtwinklig, verlaufende Querachse und eine gleichmäßige Lastverteilung auf die einzelnen tragenden Wälzkörper 17 ermöglicht.

Beim ersten Ausführungsbeispiel gemäß Fig. 1 und 2 weist die lineare Wälzlagerführung 10 zwei oberseitige Laufbahnelemente 14 beschriebener Art auf, bei denen die konvex gekrümmte Außenfläche 32 einstückiger Bestandteil des jeweiligen Tragkörpers 21 ist. Diese Wälzlagerführung 10 weist zusätzlich dazu zwei untere beidseitige Laufbahnelemente 14 auf, bei denen abweichend von den oberen Laufbahnelementen 14 der Tragkörper 21 aus zwei Teilen zusammengesetzt ist, nämlich aus einem Teil 33, der die beiden Traglaufbahnen 19, 20 aufweist, und aus einem rückseitigen Tragteil 34, der seinerseits die einachsig oder zweiachsig konkav oder konvex gekrümmte Außenfläche 32 aufweist. Die Kontaktfläche des Teils 33 und des Tragteils 34, auf der diese aneinander liegen, ist nicht gekrümmt, sondern eben gestaltet. Diese Gestaltung mit dem Tragteil 34 bei beiden unteren Laufbahnelementen 14 ermöglicht einen Ausgleich der Führungen bei entsprechender Einstellung.

Man erkennt in Fig. 1 und 2 bei jedem Wälzkörperkanal 15, 16, dass deren endseitige Umlenkkanäle, ausgehend von der jeweiligen Traglaufbahn 19, 20 und dem Haltekanal 25, 26 im Käfigteil 29, nahezu horizontal nach außen gerichtet sind. Der jeweilige Rücklaufkanal 22, 23, der einer jeweiligen Traglaufbahn 19 bzw. 20 zugeordnet ist, ist im Laufbahnelement 14 in deutlich seitlichem Abstand, gemäß Fig. 2 links und rechts, neben der zugeordneten Traglaufbahn 19, 20 angeordnet. Die Rücklaufkanäle 22, 23 befinden sich mit Abstand seitlich neben dem Tragkörper 21. Dies hat den Vorteil, dass der Tragquerschnitt des jeweiligen Tragkörpers 21 und der diesen abstützende Bereich des Führungswagens 12 hinsichtlich ihres Querschnitts nicht etwa durch dortigen Verlauf der Rücklaufkanäle geschwächt sind. Somit ist gewährleistet, dass die Laufbahnelemente 14 über die jeweiligen Tragkörper 21 an einem massiven Bereich des Führungswagens 12 und in massiver Weise abgestützt sind. Etwaige notwendige Querschnittsschwächungen sind vermieden. Dies führt zu vereinfachter Fertigung und Erhöhung der Steifigkeit.

Die einzelnen Laufbahnelemente 14 stellen in sich unabhängige und einbaufertige Elemente dar, die in sich voll funktionsfähig sind. Die tragenden Wälzkörper 17 sind im Käfig 24 unverlierbar jedoch derart gehalten, dass ein Umfangsteil dieser in Richtung zur Führungsschiene 11 übersteht.

Beim ersten Ausführungsbeispiel gemäß Fig. 1 und 2 sowie auch bei den Ausführungsbeispielen gemäß Fig. 3 bis 6 sind die einzelnen Laufbahnelemente 14 im Querschnitt etwa halbmondförmig gestaltet, wobei die beiden Traglaufbahnen 19, 20 im ebenen Bereich des halbmondförmigen Querschnitts vorgesehen sind. Bei den Ausführungsbeispielen gemäß Fig. 7 und 8 hingegen sind die Laufbahnelemente 14 im Querschnitt etwa ringsegmentförmig gestaltet, wobei die zwei Traglaufbahnen 19, 20 gemäß Fig. 7 auf der Bogenaußenseite und beim Beispiel gemäß Fig. 8 auf der Bogeninnenseite des Ringsegments vorgesehen sind.

Es versteht sich, dass z.B. beim Ausführungsbeispiel gemäß Fig. 1 und 2 zwischen der Führungsschiene 11 und dem Führungswagen 12, in Längsbewegungsrichtung betrachtet, bedarfsweise statt nur eines Laufbahnelements 14 mehrere Laufbahnelemente 14 fluchtend und dabei in Längsrichtung in Abstand voneinander angeordnet sein können. Wie ersichtlich ist, sind zwischen der Führungsschiene 11 und dem Führungswagen 12, quer zur Längsbewegungsrichtung betrachtet, mehrere Laufbahnelemente 14 angeordnet, wobei beim Ausführungsbeispiel in Fig. 1 und 2 insgesamt vier derartige Laufbahnelemente 14 vorgesehen sind. Bei einem anderen, nicht gezeigten Ausführungsbeispiel sind mindestens drei derartige Laufbahnelemente 14 vorgesehen, und zwar auf jeder Längsseite ein Laufbahnelement 14 und auf der Oberseite der Führungsschiene 11 zwischen dieser und dem Führungswagen 12 zumindest ein weiteres Laufbahnelement 14.

Generell weist die Führungsschiene 11 mehrere, vorzugsweise mindestens drei, längs gerichtete Führungsspuren für jeweilige Führungen auf. Dabei weist jede Führungsspur der Führungsschiene 11 zwei innerhalb der gemeinsamen Ebene 27 und in Abstand nebeneinander angeordnete, eingetiefte Laufbahnen 39, 40 auf, die längs verlaufen und den zwei Traglaufbahnen 19, 20 zugeordnet sind. Diese beiden Laufbahnen 39,40 jeder einzelnen Führungsspur der Führungsschiene 11 sind beidseitig einer nur in Fig. 2 eingezeichneten Berührungsnormalen 41 und symmetrisch dazu angeordnet. Die Laufbahnen 39,40 jeder Führungsspur der Führungsschiene 11 und/oder die zugeordneten Traglaufbahnen 19, 20 eines Laufbahnelements 14, insbesondere Tragkörpers 21, sind - im Querschnitt betrachtet - jeweils aus zwei Bogenabschnitten verschiedener Radien zusammengesetzt unter Bildung von Vierpunktanlagen für die kugelförmig gestalteten Wälzkörper 17. Diese vier Anlagen sind in Fig. 2 mit vier Punkten 42 bis 45 verdeutlicht. Da das Laufbahnelement 14 aufgrund der konvexen Krümmung auf der Außenfläche 32 um eine Längsachse pendeln kann, verteilt sich die Last gleichmäßig auf die in Fig. 2 linke und rechte Laufbahn 39, 40 sowie Traglaufbahn 19, 20. Aus diesem Grund drehen sich die Wälzkörper 17 um Achsen, die rechtwinklig zu den Verbindungslinien der Berührungspunkte der Wälzkörper 17 liegen. Damit ergibt sich ein geometrisch einwandfreies Abwälzen der Wälzkörper 17 ohne Gleitschlupf. Die Laufbahnberührungspunkte 42, 43 der Führungsschiene 11 und die Berührungspunkte 44, 45 des je Führungsspur zugeordneten Laufbahnelements 14, insbesondere Tragkörpers 21, liegen auf Parallelen 46 bzw. 47 der Berührungsnormalen 41, die zugleich die Abstütznormale ist. Die Laufbahnen 39, 40 einer jeweiligen Führungsspur der Führungsschiene 11 sind flach und nur geringfügig eingetieft. Dies hat nicht nur fertigungstechnische Vorteile, sondern führt auch zu günstigerer Belastung der Wälzkörper 17 und der Traglaufbahnen 19, 20 sowie zur größerer Steifigkeit der Führungsschiene 11 und ferner zu größerer Laufruhe bei der Relativverschiebung des Führungswagens 12 relativ zur Führungsschiene 11 bzw. umgekehrt. Im Querschnitt sind die Laufbahnen 39, 40 einer jeweiligen Führungsspur der Führungsschiene 11 etwa kreisbogenabschnittförmig oder statt dessen auch gotisch geformt.

Wie beim ersten Ausführungsbeispiel in Fig.1 und 2 verdeutlicht ist, weist die Führungsschiene 11 zwei in Bezug auf eine Längsmittelachse 48 symmetrische Schienenlängselemente 49, 50 auf, die beim ersten Ausführungsbeispiel auf ihrer jeweiligen Außenseite zueinander und zur Längsmittelachse 48 etwa parallel verlaufende Führungsspuren aufweisen. Beim Ausführungsbeispiel gemäß Fig. 7 hingegen weisen die Schienenlängselemente 49, 50 statt dessen auf deren Innenseite zueinander parallele Führungsspuren auf. Beim Beispiel in Fig. 1 und 2 hat jedes der Schienenlängselemente 49, 50 eine oben und dabei etwa horizontal verlaufende Führungsspur 51 sowie ferner eine schräg von außen nach innen und unten geneigte Führungsspur 52. Die horizontale Führungsspur 51 erstreckt sich etwa im Bereich der horizontalen Ebene 27. Beim zweiten Ausführungsbeispiel gemäß Fig. 3 und dritten Ausführungsbeispiel gemäß Fig. 4 bis 6 ist statt der oberen, etwa horizontalen Führungsspur 51 gemäß Fig. 1 und 2 eine weitere schräge Führungsspur 53 vorhanden. Das jeweilige Schienenlängselement 49, 50 hat dadurch zwei schräge Führungsspuren 52, 53, von denen die obere 53 von innen nach außen und nach unten schräg gerichtet ist, während die untere schräge Führungsspur 52 von außen nach innen und nach unten schräg geneigt ist. Beide Führungsspuren 52, 53 bilden dadurch etwa einen nach außen gerichteten abgestumpften Keil. Bei einem anderen, nicht gezeigten Ausführungsbeispiel kann jedes Schienenlängselement 49, 50 ebenfalls zwei schräge Führungsspuren aufweisen, die beide schräg von außen nach innen verlaufen und etwa einen nach innen gerichteten Keil bilden. Bei dem in Fig. 7 gezeigten Ausführungsbeispiel weist jedes Schienenlängselement 49, 50 eine konkave Seitenrinne 54 auf, die im Querschnitt etwa kreisbogenabschnittförmig gestaltet ist und auf diesem Kreisbogenabschnitt zwei beabstandete Führungsspuren für jeweilige Laufbahnelemente 14 bildet.

Bei dem in Fig. 8 und 9 gezeigten fünften Ausführungsbeispiel weist die Führungsschiene 11 einen etwa kreisförmigen Querschnitt und somit Zylinderform auf, wobei drei konvexe Bereiche 55 gebildet sind, die im Querschnitt kreisbogenabschnittförmig sind und drei in Umfangsrichtung-aufeinanderfolgende Führungsspuren für jeweils zugeordnete Laufbahnelemente 14 bilden.

Der Führungswagen 12 weist zwei beidseitige, in Bezug auf die Längsmittelachse 48 symmetrische und im Querschnitt etwa kreisbogenabschnittförmige Längsnuten 56, 57 auf. Lediglich beim Beispiel gemäß Fig. 8 und 9 enthält der Führungswagen 12 statt dessen eine teilzylindrische Längsnut 58, die sich über einen Umfangswinkel von deutlich größer 180° erstreckt, jedoch kleiner als 360° Umfangswinkel bemessen ist. Betrachtet man zunächst Fig. 1 und 2, erkennt man, dass in den beidseitigen Längsnuten 56, 57 des Führungswagens 12 die zugeordneten Schienenlängselemente 49 bzw. 50 der Führungsschiene 11 aufgenommen sind, und zwar zusammen mit den der jeweiligen Führung dienenden Laufbahnelementen 14. Die Laufbahnelemente 14 sind dabei mit ihrer bei Fig. 1 und 2 die einachsige, formgleiche Krümmung aufweisenden Außenfläche 32 der Rückseite 31 radial an der jeweiligen Längsnut 56, 57 abgestützt. Die konvex gekrümmte Außenfläche 32 ist an die Krümmung der kreisbogenabschnittförmigen Längsnut 56, 57 angepasst, so dass jedes Laufbahnelement 14 innerhalb der Längsnut 56, 57 mit der gekrümmten Außenfläche 32 des Tragkörpers 21 anliegt und abgestützt ist, während der übrige Bereich des Laufbahnelements 14 auf der Außenseite in radialem Abstand von der Längsnut 56, 57 und derart verläuft, dass kein Kontakt mit der Längsnut 56, 57 besteht und dadurch ein Pendeln des jeweiligen Laufbahnelements 14 mit der gekrümmten Außenfläche 32 relativ zur Längsnut 56, 57 möglich ist.

Im Zusammenhang mit Fig. 1 bis 3 ist nicht weiter dargestellt, dass die einzelnen Laufbahnelemente 14 in Richtung der Führungsschiene 11 mit einer Federkraft beaufschlagt und an die Führungsschiene 11 angedrückt sind. Dadurch ist gewährleistet, dass die Wälzkörper 17 immer Kontakt mit der jeweiligen Traglaufbahn 19, 20 einerseits und der Laufbahn 39, 40 andererseits haben und bei der relativen Längsbewegung störungsfrei abrollen können, ohne dass die Gefahr eines Schlupfes besteht. Die Federkraft kann vielfältig erzeugt bzw. hergestellt werden. Bei einem nicht gezeigten Ausführungsbeispiel sind an den einzelnen Laufbahnelementen 14 z.B. geeignete Halteelemente angebracht, die beim Einbau der eigenständigen Laufbahnelemente 14 elastisch in zugeordnete Aufnahmen des Führungswagens 12 eingreifen.

Bei dem in Fig. 4 bis 6 gezeigten Ausführungsbeispiel greifen an jedem Laufbahnelement 14 an jedem Ende dieses z.B. elastische Halteelemente 59, 60 z.B. in Form von Federbügeln an, die am Führungswagen 12 festlegbar sind. In Fig. 5 dieses Ausführungsbeispieles sind auch beidseitige Umlenkkanäle 61, 62 sichtbar, mittels denen die Umlenkung der tragenden Wälzkörper 17 in den zugeordneten Rücklaufkanal 23 geschieht. Die Halteelemente 59, 60 in Form z.B. von Federbügeln wirken mit den ausfederbaren Enden auf die Laufbahnelemente 14 in zumindest radialer Richtung derart ein, dass die Laufbahnelemente 14 in Richtung der Tragschiene 11 mit Federkraft beaufschlagt sind. Auf diese Weise wird ein Schlupf vermieden. Die Halteelemente 59, 60 können bedarfsweise auch noch axial federnd auf die Laufbahnelemente 14 einwirken. Zumindest bewirken diese eine Positionierung der Laufbahnelemente 14 in Längsrichtung in Bezug auf den Führungswagen 12.

Die erläuterten Laufbahnelemente 14 stellen unabhängige, einbaufertige Bauteile dar, die, wie erläutert, zwei Wälzkörperkanäle 15, 16 aufweisen und somit die beim Tragkörper 21 verwirklichte Traglaufbahn 19, 20, den vom Käfigelement 24 gebildeten zugeordneten Rücklaufkanal 22, 23 und den jeweils zugeordneten Umlenkkanal 61, 62 (Fig. 5) beinhalten und als eigenständige Elemente gehandelt und bedarfsweise eingesetzt werden können. Beim Ausführungsbeispiel gemäß Fig. 1 bis 3 sind die einzelnen Laufbahnelemente 14 mit ihrem jeweiligen Tragkörper 21 so in der Längsnut 56, 57 des Führungswagens 12 abgestützt, dass eine möglichst gleichmäßige Lastverteilung auf die Wälzkörper 17 stattfindet. Dies ist durch die selbsttätige Schwenkbarkeit der Laufelemente 14 relativ zur Längsnut 56, 57 möglich, da der jeweilige Tragkörper 21 mit seiner teilzylindrischen Außenfläche 32 an der Längsnut 56, 57 abgestützt ist und einer Wippe ähnlich sich selbsttätig bei der Abstützung einstellen kann. Von Vorteil ist ferner, dass die Laufbahnelemente 14 einen geringen Bauraum benötigen, keine Querschnittsschwächung im Bereich des jeweiligen Tragkörpers 21 und des Führungswagens 12 bedingen und aufgrund des geringen erforderlichen Bauraums auch kompakte Wälzlagerführungen 10 ermöglichen. Die Wälzlagerführung 10 bietet trotz geringer Abmessungen eine große Steifigkeit und ermöglicht eine einfache, kostengünstige Fertigung. Die unabhängigen, einbaufertigen Laufbahnelemente 14 werden beim Ausführungsbeispiel in Fig. 1 bis 3 aufgrund der z.B. in Längsrichtung durchlaufenden zylindrischen Außenfläche 32 in Bezug auf den Führungswagen 12 in Längsrichtung mittels nicht weiter gezeigter Halteelemente in Position gehalten, die elastisch sein können und in entsprechende Aufnahmekonturen des Führungswagens 12 beim Einsetzen der Laufbahnelemente 14 eingreifen.

Bei dem in Fig. 4 bis 6 gezeigten dritten Ausführungsbeispiel ist der jeweilige Tragkörper 21 jedes Laufbahnelements 14 auf seiner den beiden Traglaufbahnen 19, 20 abgewandten Rückseite 31 mit einer zweiachsigen, kugelabschnittförmigen Krümmung 63 versehen, die bei diesem Ausführungsbeispiel konvex, also ballig, gestaltet ist, bei einem anderen, nicht gezeigten Ausführungsbeispiel statt dessen aber auch konkav, das heißt entsprechend einer kugelabschnittfömigen Einsenkung, gestaltet sein kann. Wie Fig. 5 zeigt, erstreckt sich die zweiachsige, etwa kugelabschnittförmige Krümmung 63 etwa im Bereich der Längenmitte des Tragkörpers 21. In Anpassung daran ist die zugeordnete jeweilige Längsnut 56, 57 etwa auf dem Bereich der Längenmitte mit einer zweiachsig gekrümmten Einsenkung 64 versehen, in die die Krümmung 63 eingreift. Auf diese Weise ist das jeweilige Laufbahnelement 14 in Bezug auf den Führungswagen 12 in Axialrichtung gehalten, ohne dass es dazu etwaiger zusätzlicher Elemente bedarf. Vor allem ist erreicht, dass die einzelnen Laufbahnelemente 14 sich jeweils ähnlich einem Kugelgelenk um eine Längsachse und Querachse selbsttätig relativ zum Führungswagen 12 bewegen können und sich deswegen in Bezug auf die Laufbahnen 39, 40 der Führungsschiene 11 selbsttätig so ausrichten können, dass eine möglichst gleichmäßige Lastverteilung auf die einzelnen tragenden Wälzkörper 17 geschieht. Zugleich ist durch den Formschluss der in die Einsenkung 64 eingreifenden, etwa kugelabschnittförmigen Krümmung 63 eine axiale Halterung des jeweiligen Laufbahnelements 14 in Bezug auf den Führungswagen 12 erreicht, ohne dass es dazu besonderer zusätzlicher Halteelemente bedarf. Man erkennt, dass hinsichtlich der Krümmung 63 und der dazu passenden Einsenkung 64 auch eine kinematische Umkehr etwa derart möglich ist, dass die kugelabschnittförmige Krümmung konvexer Gestaltung im Bereich der Längsnut 56, 57 des Führungswagens 12 vorgesehen ist und die entsprechende, kugelabschnittförmige Einsenkung beim Laufbahnelement 14, insbesondere dessen Tragkörper 21, verwirklicht ist. Günstiger ist die Gestaltung entsprechend Fig. 4 bis 6, da zur Verwirklichung der Einsenkung 64 lediglich ein ringsum laufender Einstich bei der jeweiligen Längsnut 56 bzw. 57 mit kugelabschnittförmiger Kontur erforderlich ist. Die insbesondere federnden Halteelemente 59, 60 ermöglichen das Einsetzen der Laufbahnelemente 14 in die Längsnuten 56, 57 und axiale Positionieren entsprechend Fig. 5. Gemäß Fig. 5 schließen die einzelnen Laufbahnelemente 14 innerhalb der Längsnuten 56, 57 in Umfangsrichtung je Längsnut 56, 57 nur mit geringem Abstand dazwischen aneinander an. In diesem Zwischenbereich können bedarfsweise Abstandsglieder 65 platziert sein, wie dies zur Verdeutlichung in Fig. 8 gezeigt ist.

Auch bei den Ausführungsbeispielen in Fig. 7 bis 9 sind die einzelnen Laufbahnelemente 14 um eine zu den Laufbahnen 39, 40 der Führungsschiene 11 etwa parallele Längsachse und eine dazu quer, insbesondere etwa rechtwinklig, verlaufende Querachse selbsteinstellend beweglich. Dies wird durch entsprechende kugelabschnittförmige konvexe Krümmung 63 und zugeordnete, etwa kugelabschnittförmige Einsenkung 64 erreicht, wobei letztere im Bereich der Längsnuten 56, 57 z.B. etwa im Bereich der Längenmitte vorgesehen ist. Beim Beispiel gemäß Fig. 7 sind zwischen den an der Seitenrinne 54 der Schienenlängselemente 49, 50 anliegenden Laufbahnelementen 14 und der jeweiligen Längsnut 56, 57 des Führungswagens 12 etwa zylindrische, z.B. rohrförmige, Elemente als Abstützelemente 66 eingesetzt. Die Abstützelemente 66 sind elastisch federnd und bewirken, dass die Laufbahnelemente 14 in Richtung zur Führungsschiene 11 vorgespannt sind. Dadurch ist gewährleistet, dass die Wälzkörper 17 ständig in Kontakt mit den Laufbahnen 39, 40 sowie Traglaufbahnen 19, 20 gehalten sind und ein Schlupf verhindert ist. Auch können diese Abstützelemente 66 eine Positionierung der Laufbahnelemente 14 in Längsrichtung der Längsnuten 56, 57 bewirken. Die jeweilige Längsnut 56, 57 weist z.B. im Bereich der Längenmitte eine etwa kugelabschnittförmige Einsenkung 64 auf, z.B. etwa entsprechend derjenigen in Fig. 5. Jedes Abstützelemente 66 weist auf seiner Außenseite eine kugelabschnittförmige Krümmung 63 etwa entsprechend derjenigen in Fig. 5 auf und ist mit dieser Krümmung 63 in der Einsenkung 64 der Längsnut 56, 57 aufgenommen, wodurch eine entsprechende zweiachsige Kippbewegung des jeweiligen Abstützelements 66 relativ zum Führungswagen 12 möglich ist. Die kugelabschnittförmige Einsenkung 64 in der Längsnut 56, 57 dient als Stützfläche zur zweiachsig beweglichen Abstützung des jeweiligen Abstützelements 66. In Anpassung an diese Gestaltung können bedarfsweise die Tragkörper 21 der Laufbahnelemente 14 mit einer konkaven und hierbei etwa kugelabschnittförmigen Außenseite an der konvexen Abstützfläche des jeweiligen Abstandsgliedes 66 anliegen, so dass auch die Laufbahnelemente 14 in Bezug auf die Abstützelemente 66 zweiachsig beweglich sind zum Ausgleich und zur Anpassung an die Laufbahnen 39, 40.

Bei dem in Fig. 8 und 9 gezeigten Ausführungsbeispiel weist der Führungswagen 12 innerhalb der teilzylindrischen Längsnut 58 analog Fig. 5 eine zweiachsig gekrümmte, etwa kugelabschnittförmige Einsenkung 64 auf. In Anpassung daran ist der Tragkörper 21 jedes Laufbahnelements 14 auf seiner Rückseite 31 mit einer zweiachsigen, etwa kugelabschnittförmigen Krümmung 63 versehen, die in der Einsenkung 64 beweglich aufgenommen ist. Auf diese Weise ist jedes Laufbahnelement 14 relativ zum Führungswagen 12 selbsttätig zweiachsig schwenkbar und damit an den Verlauf der jeweiligen Laufbahn 39, 40 der Führungsschiene 11 selbsttätig so anpassbar, dass eine möglichst gleichmäßige Lastverteilung auf die einzelnen tragenden Wälzkörper 17 erreicht wird. In Fig. 9 ist ein Umlenkkanal 61 angedeutet, der mittels einer Endabdeckung 67 begrenzt ist. Man erkennt aus Fig. 8, dass je Laufbahnelement 14 dessen Traglaufbahnen 19, 20, in Umfangsrichtung betrachtet, in großem Abstand voneinander und derart verlaufen, dass die Traglaufbahnen 19, 20 am jeweiligen Ende des ringsegmentförmigen Tragkörpers 21 platziert sind. Dazwischen ist das zweiteilige Käfigelement 24 angeordnet, das die zugeordneten Rücklaufkanäle 22, 23 für die Wälzkörper 18 bildet. Auf dem Umfang des teilzylindrischen Schienenlängselements sind drei Führungsspuren und konvexe Bereiche 55 gebildet, denen drei Laufbahnelemente 14 zugeordnet sind, die in Umfangsrichtung relativ eng benachbart angeordnet sind. Diese Anordnung hat insbesondere den Vorteil, dass durch relativ weit unten platzierte tragende Wälzkörper 17 große Belastungen aufgenommen werden können, denen der Führungswagen 12 ausgesetzt ist.

Die Wälzlagerführung 10 gemäß der Erfindung hat den besonderen Vorteil, dass sich aufgrund der selbsttätig möglichen Einstellung der einzelnen Laufbahnelemente 14 mit Tragkörper 21 ein Wälzkörperumlauf ohne Schlupf ergibt. Dadurch ist es möglich, die Wälzkörperlaufbahnen, die durch die Laufbahnen 39, 40 sowie durch die Traglaufbahnen 19, 20 gebildet sind, als jeweilige Vierpunktlager mit geringem Druckwinkel auszuführen. Dadurch lässt sich die Tragfähigkeit des Wälzkörperkontakts nahezu verdoppeln. Dies ermöglicht höchsttragfähige Wälzlagerführungen 10, die zudem kompakt und relativ leicht bauen und einen geringen Bauraum bedingen. Die einzelnen Laufbahnelemente 14 sind als unabhängige, einbaufertige Bauteile für unterschiedliche Profile von Führungsschienen einsetzbar.

## Patentansprüche

1. Lineares Wälzlagerelement mit endlosem Wälzkörperkanal, der aus einer Traglaufbahn für tragende Wälzkörper an einem Tragkörper, aus einem Rücklaufkanal für rücklaufende Wälzkörper und aus die Traglaufbahn und den Rücklaufkanal an beiden Enden jeweils endlos miteinander verbindenden Umlenkkanälen gebildet ist, die von Endabdeckungen begrenzt sind, wobei zwei Wälzkörperkanäle (15, 16) vorgesehen sind mit zwei innerhalb einer gemeinsamen Ebene (27) und in Abstand nebeneinander angeordneten, längs verlaufenden Traglaufbahnen (19, 20) am Tragkörper (21) für tragende Wälzkörper (17) und zwei zugeordneten Rücklaufkanälen (22, 23) für rücklaufende Wälzkörper (18) und jeweiligen Umlenkkanälen (61, 62), und wobei der Tragkörper (21) auf seiner den beiden nebeneinander verlaufenden Traglaufbahnen (19, 20) abgewandten Rückseite (31) eine Krümmung aufweist, **dadurch gekennzeichnet,**
**dass** die Rückseite (31) eine zweiachsig konvex oder konkav gekrümmte Außenfläche (32, 63) mit kugelabschnittförmiger Krümmung (63) aufweist.

2. Lineares Wälzlagerelement nach Anspruch 1,
**gekennzeichnet durch**
die Ausbildung als für sich unabhängiges und einbaufertiges Laufbahnelement (14), das die zwei Wälzkörperkanäle (15, 16) beinhaltet.

3. Lineares Wälzlagerelement nach Anspruch 1 oder 2,
**dadurch gekennzeichnet,**
**dass** dem Tragkörper (21) ein zweiteiliges Käfigelement (24) zugeordnet ist, das mit dem Tragkörper (21) verbunden ist und zwischen zwei Käfigelementen (28, 29) zwei Rücklaufkanäle (22, 23) bildet.

4. Lineares Wälzlagerelement nach Anspruch 1 oder 2,
**dadurch gekennzeichnet,**
**dass** dem Tragkörper (21) ein einteiliges Käfigelement (24) zugeordnet ist, das mit dem Tragkörper (21) verbunden ist und zwei Rücklaufkanäle (22, 23) enthält.

5. Lineares Wälzlagerelement nach Anspruch 1,
**dadurch gekennzeichnet,**
**dass** die gekrümmte Außenfläche (32, 63) sich über die ganze Länge des Tragkörpers (21) erstreckt.

6. Lineares Wälzlagerelement nach Anspruch 1,
**dadurch gekennzeichnet,**
**dass** die zweiachsig gekrümmte Außenfläche (32, 68) sich im Bereich der Längenmitte des Tragkörpers (21) erstreckt.

7. Lineares Wälzlagerelement nach einem der Ansprüche 1 bis 6,
**dadurch gekennzeichnet,**
**dass** die zweiachsige konvexe oder konkave Krümmung (63) so ausgebildet ist, dass sie eine selbsttätige Einstellung des Laufbahnelements (14) um eine zu den beiden Traglaufbahnen (19, 20) etwa parallele Längsachse und eine zu dieser quer, insbesondere rechtwinklig, verlaufende Querachse und eine gleichmäßige Lastverteilung auf die einzelnen tragenden Wälzkörper (17) ermöglicht.

8. Lineares Wälzlagerelement nach einem der Ansprüche 1 bis 7,
**dadurch gekennzeichnet,**
**dass** der Tragkörper (21) aus einem die beiden Traglaufbahnen (19, 20) enthaltenden Teil (33) und einem rückseitigen Tragteil (34) zusammengesetzt ist, wobei der rückseitige Tragteil (34) die Außenfläche (32) mit der zweiachsige konkaven oder konvexen Krümmung (63) aufweist.

9. Lineares Wälzlagerelement nach einem der Ansprüche 2 bis 8,
**dadurch gekennzeichnet,**
**dass** der jeweilige Rücklaufkanal (22, 23), der einer Traglaufbahn (19, 20) zugeordnet ist, im Laufbahnelement (14) in seitlichem Abstand neben der zugeordneten Traglaufbahn (19, 20) angeordnet ist.

10. Lineares Wälzlagerelement nach einem der Ansprüche 3 bis 9,
**dadurch gekennzeichnet,**
**dass** die Wälzkörper (17, 18), insbesondere die tragenden Wälzkörper (17), mittels des Käfigelements (24) unverlierbar in Bezug auf die zwei Traglaufbahnen (19, 20) gehalten sind.

11. Lineares Wälzlagerelement nach einem der Ansprüche 1 bis 10,
**dadurch gekennzeichnet,**
**dass** die Wälzkörper (17, 18) aus Kugeln bestehen.

12. Lineares Wälzlagerelement nach einem der Ansprüche 2 bis 11,
**dadurch gekennzeichnet,**
**dass** die Laufbahnelemente (14) im Querschnitt etwa halbmondförmig oder ringsegmentförmig gestaltet sind, wobei die zwei Traglaufbahnen (19, 20) im ebenen Bereich des halbmondförmigen Querschnitts bzw. auf der Bogenaußenseite oder Bogeninnenseite des Ringsegments vorgesehen sind.

13. Lineare Wälzlagerführung, mit einem auf einer Führungsschiene (11) relativ verschiebbar gelagerten Führungswagen (12),
**dadurch gekennzeichnet,**
**dass** zwischen der Führungsschiene (11) und dem Führungswagen (12) zu dessen Führung mindestens ein lineares Wälzlagerelement (13) nach einem oder mehreren der vorhergehenden Ansprüche, vorzugsweise in Form eines unabhängigen und einbaufertigen Laufbahnelements (14), angeordnet ist.

14. Lineare Wälzlagerführung nach Anspruch 13,
**dadurch gekennzeichnet,**
**dass** zwischen der Führungsschiene (11) und dem Führungswagen (12), in Längsbewegungsrichtung betrachtet, mehrere lineare Wälzlagerelemente (13) in Form von unabhängigen Laufbahnelementen (14) fluchtend, jedoch in Längsrichtung in Abstand voneinander, angeordnet sind.

15. Lineare Wälzlagerführung nach Anspruch 13 oder 14,
**dadurch gekennzeichnet,**
**dass** zwischen der Führungsschiene (11) und dem Führungswagen (12), quer zur Längsbewegungsrichtung betrachtet, mehrere, vorzugsweise mindestens drei, lineare Wälzlagerelemente (13) in Form von unabhängigen Laufbahnelementen (14) angeordnet sind.

16. Lineare Wälzlagerführung nach einem der Ansprüche 13 bis 15,
**dadurch gekennzeichnet,**
**dass** die Führungsschiene (11) mehrere, vorzugsweise mindestens drei, längsgerichtete Führungsspuren (51 bis 53) aufweist.

17. Lineare Wälzlagerführung nach einem der Ansprüche 13 bis 16,
**dadurch gekennzeichnet,**
**dass** die Führungsschiene (11) für jede Führungsspur (51 bis 53) mit zumindest einem Laufbahnelement (14) zwei innerhalb einer gemeinsamen Ebene (27) und in Abstand nebeneinander angeordnete, längs verlaufende und den zwei Traglaufbahnen (19, 20) zugeordnete eingetiefte Laufbahnen (39, 40) aufweist.

18. Lineare Wälzlagerführung nach Anspruch 17,
**dadurch gekennzeichnet,**
**dass** die beiden Laufbahnen (39, 40) einer Führungsspur (51 bis 53) beidseitig der Berührungsnormalen (41) und symmetrisch angeordnet sind.

19. Lineare Wälzlagerführung nach einem der Ansprüche 13 bis 18,
**dadurch gekennzeichnet,**
**dass** die Laufbahnberührungspunkte (42 bis 45) der Führungsschiene (11) und der je Führungsspur (51 bis 53) zugeordneten Laufbahnelemente (14), insbesondere des jeweiligen Tragkörpers (21) dieser, auf Parallelen (47) zur Berührungsnormalen (41) liegen.

20. Lineare Wälzlagerführung nach einem der Ansprüche 13 bis 19,
**dadurch gekennzeichnet,**
**dass** die Laufbahnen (39, 40) einer Führungsspur (51 bis 53) der Führungsschiene (11) und die zugeordneten Traglaufbahnen (19, 20) eines zugeordneten Laufbahnelements (14), insbesondere Tragkörpers (21) dieses, im Querschnitt betrachtet jeweils aus zwei Bogenabschnitten verschiedener Radien zusammengesetzt sind unter Bildung einer Vierpunktanlage (42 bis 45) für kugelförmige Wälzkörper (17, 18).

21. Lineare Wälzlagerführung nach einem der Ansprüche 13 bis 20,
**dadurch gekennzeichnet,**
**dass** die Laufbahnen (39, 40) einer Führungsspur (51 bis 53) nur geringfügig eingetieft sind.

22. Lineare Wälzlagerführung nach einem der Ansprüche 13 bis 21,
**dadurch gekennzeichnet,**
**dass** die Laufbahnen (39, 40) einer Führungsspur (51 bis 53) der Führungsschiene (11) in Querschnitt kreisbogenabschnittförmig oder gotisch geformt sind.

23. Lineare Wälzlagerführung nach einem der Ansprüche 13 bis 22,
**dadurch gekennzeichnet,**
**dass** die Führungsschiene (11) zwei in Bezug auf eine Längsmittelachse (48) symmetrische Schienenlängselemente (49, 50) aufweist, die auf ihrer Außenseite oder Innenseite zueinander parallele Führungsspuren (51 bis 53) aufweisen.

24. Lineare Wälzlagerführung nach Anspruch 23,
**dadurch gekennzeichnet,**
**dass** jedes Schienenlängselement (49, 50) eine bei horizontaler Anordnung der Führungsschiene (11) oben und etwa horizontal verlaufende Führungsspur (51) und eine schräg von außen nach innen und unten geneigte Führungsspur (52) aufweist.

25. Lineare Wälzlagerführung nach Anspruch 23,
**dadurch gekennzeichnet,**
**dass** jedes Schienenlängselement (49, 50) zwei schräge Führungsspuren (52, 53) aufweist, von denen eine bei horizontaler Anordnung der Führungsschiene (11) obere schräge Führungsspur (53) von innen nach außen und unten schräg gerichtet ist und eine untere schräge Führungsspur (52) von außen nach innen und unten schräg geneigt ist, wobei beide Führungsspuren (52, 53) etwa entsprechend einem nach außen gerichteten Keil gebildet sind.

26. Lineare Wälzlagerführung nach Anspruch 23,
**dadurch gekennzeichnet,**
**dass** jedes Schienenlängselement (49, 50) zwei schräge Führungsspuren aufweist, die beide schräg von außen nach innen verlaufen und etwa entsprechend einem nach innen gerichteten Keil gebildet sind.

27. Lineare Wälzlagerführung nach Anspruch 23,
**dadurch gekennzeichnet,**
**dass** jedes Schienenlängselement (49, 50) eine konkave Seitenrinne (54) aufweist, die im Querschnitt kreisbogenabschnittförmig geformt ist und zwei beabstandete Führungsspuren aufweist.

28. Lineare Wälzlagerführung nach einem der Ansprüche 13 bis 23,
**dadurch gekennzeichnet,**
**dass** die Führungsschiene (11) drei konvexe Bereiche (55) aufweist, die im Querschnitt etwa kreisbogenabschnittsförmig geformt sind und drei in Umfangsrichtung beabstandete Führungsspuren bilden.

29. Lineare Wälzlagerführung nach einem der Ansprüche 13 bis 28,
**dadurch gekennzeichnet,**
**dass** der Führungswagen (12) zwei in Bezug auf eine Längsmittelachse (48) symmetrische Längsnuten (56, 57) aufweist, in denen die Schienenlängselemente (49, 50) der Führungsschiene (11) und die der Führung dienenden Laufbahnelemente (14) aufgenommen sind, wobei die Laufbahnelemente (14) mit ihrer die zweiachsige formgleiche Krümmung aufweisenden Außenfläche (32, 63) an der jeweiligen Längsnut (56, 57) abgestützt sind.

30. Lineare Wälzlagerführung nach Anspruch 29,
**dadurch gekennzeichnet,**
**dass** die Laufbahnelemente (14) mit ihrer zweiachsig gekrümmten Außenfläche (32, 63) relativ zum Führungswagen (12) in der jeweiligen Längsnut (56, 57) um eine zu den Laufbahnen (39, 40) parallele Längsachse und dazu quer, insbesondere rechtwinklig, verlaufende Querachse selbst einstellend beweglich sind.

31. Lineare Wälzlagerführung nach einem der Ansprüche 13 bis 30,
**dadurch gekennzeichnet,**
**dass** die einzelnen Laufbahnelemente (14) in Richtung der Führungsschiene (11) mit einer Federkraft beaufschlagt und an die Führungsschiene (11) angedrückt sind.

32. Lineare Wälzlagerführung nach einem der Ansprüche 27 bis 31,
**dadurch gekennzeichnet,**
**dass** zwischen den Laufbahnelementen (14) in der jeweiligen Seitenrinne (54) und der jeweiligen Längssnut (56, 57) des Führungswagens (12) zylindrische, z. B. rohrförmige, Elemente als Abstützelemente (66) angeordnet sind.

33. Lineare Wälzlagerführung nach Anspruch 32,
**dadurch gekennzeichnet,**
**dass** die Abstützelemente (66) elastisch federnd sind und die Laufbahnelemente (14) halten und in Richtung der Führungsschiene (11) vorspannen.

34. Lineare Wälzlagerführung nach einem der Ansprüche 13 bis 33,
**dadurch gekennzeichnet,**
**dass** der Führungswagen (12) innerhalb der jeweiligen Längsnut (56, 57) eine zweiachsig gekrümmte konkave oder konvexe Stützfläche aufweist, die an die konvex bzw. konkav gekrümmte Rückseite (31, 63) der Tragkörper (21) der Laufbahnelemente (14) angepasst und zur Aufnahme dieser vorgesehen ist.

35. Lineare Wälzlagerführung nach den Ansprüchen 32 und 34,
**dadurch gekennzeichnet,**
**dass** die Abstützelemente (66) zumindest auf einem Längenabschnitt eine zweiachsig gekrümmte konkave oder konvexe Fläche (63) aufweisen, die mit der entsprechend geformten Stützfläche (64) der jeweiligen Längsnut (56, 57) zur Abstützung und axialen Halterung zusammenwirkt.

36. Lineare Wälzlagerführung nach Anspruch 35,
**dadurch gekennzeichnet,**
**dass** die Tragkörper (21) der Laufbahnelemente (14) mit ihrer konkav oder konvex gekrümmten Außenfläche an der jeweiligen konkaven oder konvexen Fläche des jeweiligen Abstützelements (66) anliegen und axial gehalten sind.

37. Lineare Wälzlagerführung nach einem der Ansprüche 13 bis 36,
**dadurch gekennzeichnet,**
**dass** die einzelnen Laufbahnelemente (14) mittels elastischer Halteelemente (59, 60) elastisch am Führungswagen (12) in Position festlegbar sind.

38. Lineare Wälzlagerführung nach Anspruch 37,
**dadurch gekennzeichnet,**
**dass** die Halteelemente (59, 60) aus Federbügeln gebildet sind, die am Ende des Führungswagens (12) daran gehalten sind und mit ihren ausfederbaren Enden auf die Laufbahnelemente (14) radial und/oder axial federnd einwirken.

39. Lineare Wälzlagerführung nach Anspruch 37,
**dadurch gekennzeichnet,**
**dass** die Halteelemente an den Laufbahnelementen (14) angebracht sind und beim Einbau dieser elastisch in zugeordnete Aufnahmen des Führungswagens (12) eingreifen.

## Claims

1. Linear rolling bearing element with an endless rolling element channel composed of a carrier raceway for load-bearing rolling elements on a carrier body, a return channel for rolling elements that are returning, and turnaround channels that connect the carrier raceway and the return channel at both ends in an endless manner and are bounded by end covers, two rolling element channels (15, 16) with two carrier raceways (19, 20) which extend longitudinally and are arranged next to each other within a common plane (27) and with a spacing between them on the carrier body (21) for load-bearing rolling elements (17), and with two associated return channels (22, 23) for rolling elements (18) that are returning, and with respective turnaround channels (61, 62) being provided, and the carrier body (21) having a curvature on its rear side (31), which faces away from the two adjacent carrier raceways (19, 20), **characterized in that** the rear side (31) has an outer surface (32, 63) with a biaxially convex or concave curvature (63) in the form of a spherical segment.

2. Linear rolling bearing element according to Claim 1, **characterized by** configuration as an independent and ready-to-install raceway element (14) that includes the two rolling element channels (15, 16).

3. Linear rolling bearing element according to Claim 1 or 2, **characterized in that** the carrier body (21) is assigned a two-piece cage element (24) that is connected to the carrier body (21) and forms two return channels (22, 23) between two cage elements (28, 29).

4. Linear rolling bearing element according to Claim 1 or 2, **characterized in that** the carrier body (21) is assigned a one-piece cage element (24) that is connected to the carrier body (21) and includes two return channels (22, 23).

5. Linear rolling bearing element according to Claim 1, **characterized in that** the curved outer surface (32, 63) extends over the entire length of the carrier body (21).

6. Linear rolling bearing element according to Claim 1, **characterized in that** the biaxially curved outer surface (32, 68) extends in the region of the longitudinal centre of the carrier body (21).

7. Linear rolling bearing element according to one of Claims 1 to 6, **characterized in that** the biaxial convex or concave curvature (63) is configured in such a way that it allows self-adjustment of the raceway element (14) around a longitudinal axis that is approximately parallel to the two carrier raceways (19, 20), and a transverse axis extending transversely, in particular at a right angle, to the said longitudinal axis, and uniform load distribution between the individual load-bearing rolling elements (17).

8. Linear rolling bearing element according to one of Claims 1 to 7, **characterized in that** the carrier body (21) is composed of a piece (33) containing the two carrier raceways (19, 20), and a rear-side carrier piece (34), the rear-side carrier piece (34) having the outer surface (32) with the biaxial concave or convex curvature (63).

9. Linear rolling bearing element according to one of Claims 2 to 8, **characterized in that** the respective return channel (22, 23) which is assigned to a carrier raceway (19, 20) is arranged in the raceway element (14) next to and with a lateral spacing from the associated carrier raceway (19, 20).

10. Linear rolling bearing element according to one of Claims 3 to 9, **characterized in that** the rolling elements (17, 18), in particular the load-bearing rolling elements (17), are held captive relative to the two carrier raceways (19, 20) by means of the cage element (24)

11. Linear rolling bearing element according to one of Claims 1 to 10, **characterized in that** the rolling elements (17, 18) comprise balls.

12. Linear rolling bearing element according to one of Claims 2 to 11, **characterized in that** the raceway elements (14) have a cross section configured approximately in the shape of a half moon or an annular segment, the two carrier raceways (19, 20) being provided in the flat region of the half moon-shaped cross section and on the outer side or inner side of the curve of the annular segment.

13. Linear rolling bearing guide, with a guide carriage (12) supported on a guide rail (11) in a manner which allows relative displacement, **characterized in that** at least one linear rolling bearing element (13) according to one or more of the preceding claims, preferably in the form of an independent and ready-to-install raceway element (14), is arranged between the guide rail (11) and the guide carriage (12) in order to guide the guide carriage (12).

14. Linear rolling bearing guide according to Claim 13, **characterized in that** a plurality of linear rolling bearing elements (13) in the form of independent raceway elements (14) are arranged between the guide rail (11) and the guide carriage (12) as viewed in a direction of longitudinal motion, such that they are aligned but spaced apart as viewed in a longitudinal direction.

15. Linear rolling bearing guide according to Claim 13 or 14, **characterized in that** a plurality of, preferably at least three, linear rolling bearing elements (13) in the form of independent raceway elements (14) are arranged between the guide rail (11) and the guide carriage (12) as viewed transversely to the direction of longitudinal motion.

16. Linear rolling bearing guide according to one of Claims 13 to 15, **characterized in that** the guide rail (11) has a plurality of, preferably at least three, longitudinally oriented guide tracks (51 to 53).

17. Linear rolling bearing guide according to one of Claims 13 to 16, **characterized in that,** for each guide track (51 to 53) with at least one raceway element (14), the guide rail (11) has two recessed raceways (39, 40), which are arranged next to each other with a spacing within a common plane (27), extend longitudinally, and are assigned to the two carrier raceways (19, 20).

18. Linear rolling bearing guide according to Claim 17, **characterized in that** the two raceways (39, 40) of one guide track (51 to 53) are arranged symmetrically and on both sides of the normal of contact (41).

19. Linear rolling bearing guide according to one of Claims 13 to 18, **characterized in that** the raceway points of contact (42 to 45) of the guide rail (11) and the raceway elements (14) assigned to each guide track (51 to 53), in particular the respective carrier body (21) thereof, lie on parallels (47) to the normal of contact (41).

20. Linear rolling bearing guide according to one of Claims 13 to 19, **characterized in that** the raceways (39, 40) of a guide track (51 to 53) of the guide rail (11) and the associated carrier raceways (19, 20) of an associated raceway element (14), in particular carrier body (21) thereof, are each composed, as viewed in cross section, of two arc segments having different radii, forming a four-point bearing contact (42 to 45) for spherical rolling elements (17, 18).

21. Linear rolling bearing guide according to one of Claims 13 to 20, **characterized in that** the raceways (39, 40) of a guide track (51 to 53) are only slightly recessed.

22. Linear rolling bearing guide according to one of Claims 13 to 21, **characterized in that** the cross section of the raceways (39, 40) of a guide track (51 to 53) of the guide rail (11) is shaped into that of a segment of a circular arc or a gothic shape.

23. Linear rolling bearing guide according to one of Claims 13 to 22, **characterized in that** the guide rail (11) has two rail longitudinal elements (49, 50) which are symmetrical relative to a longitudinal central axis (48) and have mutually parallel guide tracks (51 to 53) on their outside or inside.

24. Linear rolling bearing guide according to Claim 23, **characterized in that** each rail longitudinal element (49, 50) has a guide track (51) that is at the top and extends approximately horizontally when the guide rail (11) is arranged horizontally, and a guide track (52) that slopes obliquely downwards from the outside towards the inside.

25. Linear rolling bearing guide according to Claim 23, **characterized in that** each rail longitudinal element (49, 50) has two oblique guide tracks (52, 53), of which one, oblique guide track (53), which is at the top when the guide rail (11) is arranged horizontally, is oriented obliquely downwards from the inside towards the outside, and a lower oblique guide track (52) slopes obliquely from the outside towards the inside, both guide tracks (52, 53) being formed approximately in the manner of an outward-oriented wedge.

26. Linear rolling bearing guide according to Claim 23, **characterized in that** each rail longitudinal element (49, 50) has two oblique guide tracks, both of which extend obliquely from the outside towards the inside and are formed approximately in the manner of an inward-oriented wedge.

27. Linear rolling bearing guide according to Claim 23, **characterized in that** each rail longitudinal element (49, 50) has a concave side slot (54) which, in cross section, is shaped in the form of a segment of a circular arc, and has two guide tracks, which are spaced apart.

28. Linear rolling bearing guide according to one of Claims 13 to 23, **characterized in that** the guide rail (11) has three convex regions (55) which, in cross section, are shaped approximately in the form of a segment of a circular arc and form three guide tracks, which are spaced apart in a circumferential direction.

29. Linear rolling bearing guide according to one of Claims 13 to 28, **characterized in that** the guide carriage (12) has two longitudinal grooves (56, 57) that are symmetrical relative to a longitudinal central axis (48), in which the rail longitudinal elements (49, 50) of the guide rail (11) and the raceway elements (14), which serve to guide, are accommodated, the raceway elements (14) being supported against the respective longitudinal groove (56, 57) by their outer surface (32, 63), which has the biaxial conformal curvature.

30. Linear rolling bearing guide according to Claim 29, **characterized in that** the raceway elements (14) with their biaxially curved outer surface (32, 63) are movable in a self-adjusting manner relative to the guide carriage (12) in the respective longitudinal groove (56, 57), around a longitudinal axis parallel to the raceways (39, 40) and a transverse axis that extends transversely thereto, in particular at a right angle.

31. Linear rolling bearing guide according to one of Claims 13 to 30, **characterized in that** the individual raceway elements (14) are acted upon with a spring force in the direction of the guide rail (11) and are pressed against the guide rail (11).

32. Linear rolling bearing guide according to one of Claims 27 to 31, **characterized in that** cylindrical elements, e.g. tubular elements, are arranged as support elements (66) between the raceway elements (14) in the respective side slot (54) and the respective longitudinal groove (56, 57) of the guide carriage (12).

33. Linear rolling bearing guide according to Claim 32, **characterized in that** the support elements (66) have elastic spring action, hold the raceway elements (14), and exert preload in the direction of the guide rail (11).

34. Linear rolling bearing guide according to one of Claims 13 to 33, **characterized in that** the guide carriage (12) has, within the respective longitudinal groove (56, 57), a biaxially curved concave or convex support surface, which conforms with the convexly or concavely curved rear side (31, 63) of the carrier bodies (21) of the raceway elements (14) and which is provided to accommodate the carrier bodies (21).

35. Linear rolling bearing guide according to Claims 32 and 34, **characterized in that** the support elements (66) have, at least on a longitudinal section, a biaxially curved concave or convex surface (63) which interacts with the correspondingly shaped support surface (64) of the respective longitudinal groove (56, 57) to provide support and axial retention.

36. Linear rolling bearing guide according to Claim 35, **characterized in that** the carrier bodies (21) of the raceway elements (14) bear with their concavely or convexly curved outer surface against the respective concave or convex surface of the respective support element (66), and are held axially.

37. Linear rolling bearing guide according to one of Claims 13 to 36, **characterized in that** the individual raceway elements (14) can be fixed in position elastically on the guide carriage (12) by means of elastic holding elements (59, 60).

38. Linear rolling bearing guide according to Claim 37, **characterized in that** the holding elements (59, 60) are formed by spring brackets which are held on the end of the guide carriage (12) and, with their ends, which can undergo spring deflection, exert a radial and/or axial spring action on the raceway elements (14).

39. Linear rolling bearing guide according to Claim 37, **characterized in that** the holding elements are installed on the raceway elements (14) and, when they are installed, they engage elastically in associated recesses of the guide carriage (12).

## Revendications

1. Elément de palier à roulement linéaire avec un canal de corps de roulement sans fin qui est formé d'une piste de roulement de support pour des corps de roulement porteurs sur un corps porteur, d'un canal de retour pour le corps de roulement retournant et de canaux de déviation reliant l'un à l'autre à chaque fois sans fin la piste de roulement de support et le canal de retour aux deux extrémités, les canaux de déviation étant limités par des recouvrements d'extrémité, deux canaux de corps de roulement (15, 16) étant prévus avec deux pistes de roulement de support (19, 20) s'étendant longitudinalement et disposées à distance l'une à côté de l'autre à l'intérieur d'un plan commun (27), sur le corps porteur (21), pour des corps de roulement porteurs (17) et avec deux canaux de retour associés (22, 23) pour des corps de roulement retournants (18) et avec des canaux de déviation respectifs (61, 62), et le corps porteur (21) présentant une courbure sur son côté arrière (31) opposé aux deux pistes de roulement de support (19, 20) s'étendant l'une à côté de l'autre, **caractérisé en ce que**
le côté arrière (31) présente une surface extérieure (32, 63) de courbure convexe ou concave à deux axes avec une courbure (63) en forme de portion de sphère.

2. Elément de palier à roulement linéaire selon la revendication 1,
**caractérisé par**
la réalisation sous forme d'un élément de piste de roulement (14) indépendant en soi et prêt au montage, qui contient deux canaux de corps de roulement (15, 16).

3. Elément de palier à roulement linéaire selon la revendication 1 ou 2,
**caractérisé en ce**
**qu'**un élément de cage en deux parties (24) est associé au corps porteur (21), lequel est connecté au corps porteur (21) et forme entre deux éléments de cage (28, 29) deux canaux de retour (22, 23).

4. Elément de palier à roulement linéaire selon la revendication 1 ou 2,
**caractérisé en ce**
**qu'**un élément de cage en une seule partie (24) est associé au corps porteur (21), lequel est connecté au corps porteur (21) et contient deux canaux de retour (22, 23).

5. Elément de palier à roulement linéaire selon la revendication 1,
**caractérisé en ce que**
la surface extérieure courbée (32, 63) s'étend sur toute la longueur du corps porteur (21).

6. Elément de palier à roulement linéaire selon la revendication 1,
**caractérisé en ce que**
la surface extérieure courbée à deux axes (32, 68) s'étend dans la région du milieu de la longueur du corps porteur (21).

7. Elément de palier à roulement linéaire selon l'une quelconque des revendications 1 à 6,
**caractérisé en ce que**
la courbure convexe ou concave (63) à deux axes est réalisée de telle sorte qu'elle permette un ajustement automatique de l'élément de piste de roulement (14) autour d'un axe longitudinal approximativement parallèle aux deux pistes de roulement de support (19, 20) et autour d'un axe transversal s'étendant transversalement à celui-ci, notamment à angle droit, et une répartition de charge uniforme sur les différents corps de roulement porteurs (17).

8. Elément de palier à roulement linéaire selon l'une quelconque des revendications 1 à 7,
**caractérisé en ce que**
le corps porteur (21) est constitué d'une partie (33) contenant les deux pistes de roulement de support (19, 20) et d'une partie de support (34) du côté arrière, la partie de support (34) du côté arrière présentant la surface extérieure (32) avec la courbure concave ou convexe (63) à deux axes.

9. Elément de palier à roulement linéaire selon l'une quelconque des revendications 2 à 8,
**caractérisé en ce que**
le canal de retour respectif (22, 23), qui est associé à une piste de roulement de support (19, 20), est disposé dans l'élément de piste de roulement (14) à distance latérale à côté de la piste de roulement de support associée (19, 20).

10. Elément de palier à roulement linéaire selon l'une quelconque des revendications 3 à 9,
**caractérisé en ce que**
les corps de roulement (17, 18), en particulier les corps de roulement porteurs (17), sont maintenus au moyen de l'élément de cage (24) de manière imperdable par rapport aux deux pistes de roulement de support (19, 20).

11. Elément de palier à roulement linéaire selon l'une quelconque des revendications 1 à 10,
**caractérisé en ce que**
les corps de roulement (17, 18) se composent de billes.

12. Elément de palier à roulement linéaire selon l'une quelconque des revendications 2 à 11,
**caractérisé en ce que**
les éléments de piste de roulement (14) sont configurés en section transversale approximativement en forme de demi-lune ou en forme de segment annulaire, les deux pistes de roulement de support (19, 20) étant prévues dans la région plane de la section transversale en forme de demi-lune ou sur le côté extérieur de la courbure ou sur le côté intérieur de la courbure du segment annulaire.

13. Guidage de palier à roulement linéaire, comprenant un chariot de guidage (12) monté de manière à pouvoir coulisser relativement sur un rail de guidage (11), **caractérisé en ce**
**qu'**entre le rail de guidage (11) et le chariot de guidage (12), est disposé, pour son guidage, au moins un élément de palier à roulement linéaire (13) selon l'une quelconque ou plusieurs des revendications précédentes, de préférence sous forme d'un élément de piste de roulement (14) indépendant et prêt au montage.

14. Guidage de palier à roulement linéaire selon la revendication 13,
**caractérisé en ce**
**qu'**entre le rail de guidage (11) et le chariot de guidage (12), considéré dans la direction de déplacement longitudinal, plusieurs éléments de palier à roulement linéaire (13) sous forme d'éléments de piste de roulement indépendants (14) sont disposés en affleurement, mais à distance les uns des autres dans la direction longitudinale.

15. Guidage de palier à roulement linéaire selon la revendication 13 ou 14,
**caractérisé en ce**
**qu'**entre le rail de guidage (11) et le chariot de guidage (12), considéré transversalement à la direction de déplacement longitudinal, sont disposés plusieurs éléments de palier à roulement linéaire (13), de préférence trois, sous forme d'éléments de pistes de roulement indépendants (14).

16. Guidage de palier à roulement linéaire selon l'une quelconque des revendications 13 à 15,
**caractérisé en ce que**
le rail de guidage (11) présentent plusieurs marques de guidage (51 à 53) orientées longitudinalement, de préférence au moins trois.

17. Guidage de palier à roulement linéaire selon l'une quelconque des revendications 13 à 16,
**caractérisé en ce que**
le rail de guidage (11) pour chaque marque de guidage (51 à 53) avec au moins un élément de piste de roulement (14), présente deux pistes de roulement (39, 40) renfoncées, disposées l'une à côté de l'autre à distance à l'intérieur d'un plan commun (27), s'étendant longitudinalement et associées aux deux pistes de roulement de support (19, 20).

18. Guidage de palier à roulement linéaire selon la revendication 17,
**caractérisé en ce que**
les deux pistes de roulement (39, 40) d'une marque de guidage (51 à 53) sont disposées de part et d'autre de la normale au contact (41) et symétriquement.

19. Guidage de palier à roulement linéaire selon l'une quelconque des revendications 13 à 18,
**caractérisé en ce que**
les points de contact de la piste de roulement (42 à 45) du rail de guidage (11) et des éléments de piste de roulement (14) associés à chaque marque de guidage (51 à 53), en particulier de chaque corps porteur (21) de ces éléments, se situent sur des parallèles (47) aux normales de contact (41).

20. Guidage de palier à roulement linéaire selon l'une quelconque des revendications 13 à 19,
**caractérisé en ce que**
les pistes de roulement (39, 40) d'une marque de guidage (51 à 53) du rail de guidage (11) et les pistes de roulement de support associées (19, 20) d'un élément de piste de roulement associé (14), en particulier du corps porteur (21) de celui-ci, considérées en section transversale, sont constituées à chaque fois de deux portions de courbe de rayons différents, en formant une application à quatre points (42 à 45) pour des corps de roulement en forme de billes (17, 18).

21. Guidage de palier à roulement linéaire selon l'une quelconque des revendications 13 à 20,
**caractérisé en ce que**
les pistes de roulement (39, 40) d'une marque de guidage (51 à 53) ne sont renfoncées que légèrement.

22. Guidage de palier à roulement linéaire selon l'une quelconque des revendications 13 à 21,
**caractérisé en ce que**
les pistes de roulement (39, 40) d'une marque de guidage (51 à 53) du rail de guidage (11) sont formées en section transversale en forme de portion d'arc de cercle ou de voûte gothique.

23. Guidage de palier à roulement linéaire selon l'une quelconque des revendications 13 à 22,
**caractérisé en ce que**
le rail de guidage (11) présente deux éléments longitudinaux de rail (49, 50) symétriques par rapport à un axe médian longitudinal (48), qui présentent, sur leur côté extérieur ou leur côté intérieur, des marques de guidage parallèles les unes aux autres (51 à 53).

24. Guidage de palier à roulement linéaire selon la revendication 23,
**caractérisé en ce que**
chaque élément longitudinal de rail (49, 50) présente une marque de guidage (51) s'étendant en haut et approximativement horizontalement dans le cas d'un agencement horizontal du rail de guidage (11), et une marque de guidage (52) inclinée obliquement depuis l'extérieur vers l'intérieur et vers le bas.

25. Guidage de palier à roulement linéaire selon la revendication 23,
**caractérisé en ce que**
chaque élément longitudinal de rail (49, 50) présente deux marques de guidage obliques (52, 53), dont une marque de guidage (53) supérieure oblique dans le cas d'un agencement horizontal du rail de guidage (11) est orientée de l'intérieur vers l'extérieur et obliquement vers le bas, et dont une marque de guidage (52) inférieure oblique est inclinée depuis l'extérieur vers l'intérieur et obliquement vers le bas, les deux marques de guidage (52, 53) étant formées approximativement de manière correspondant à une cale orientée vers l'extérieur.

26. Guidage de palier à roulement linéaire selon la revendication 23,
**caractérisé en ce que**
chaque élément longitudinal de rail (49, 50) présente deux marques de guidage obliques qui s'étendent toutes deux obliquement de l'extérieur vers l'intérieur et qui sont formées approximativement comme une cale orientée vers l'intérieur.

27. Guidage de palier à roulement linéaire selon la revendication 23,
**caractérisé en ce que**
chaque élément longitudinal de rail (49, 50) présente une rigole latérale concave (54) qui est formée en section transversale en forme de portion d'arc de cercle, et qui présente deux marques de guidage espacées.

28. Guidage de palier à roulement linéaire selon l'une quelconque des revendications 13 à 23,
**caractérisé en ce que**
le rail de guidage (11) présente trois régions convexes (55) qui sont formées en section transversale approximativement en forme de portion d'arc de cercle et qui forment trois marques de guidage espacées dans la direction périphérique.

29. Guidage de palier à roulement linéaire selon l'une quelconque des revendications 13 à 28,
**caractérisé en ce que**
le chariot de guidage (12) présente deux rainures longitudinales (56, 57) symétriques par rapport à un axe médian longitudinal (48), dans lesquelles sont reçus les éléments longitudinaux de rail (49, 50) du rail de guidage (11) est les éléments de piste de roulement (14) servant au guidage, les éléments de piste de roulement (14) étant supportés avec leur surface extérieure (32, 63) présentant la courbure de même forme à deux axes sur la rainure longitudinale respective (56, 57).

30. Guidage de palier à roulement linéaire selon la revendication 29,
**caractérisé en ce que**
les éléments de piste de roulement (14) avec leur surface extérieure courbe (32, 63) à deux axes peuvent être déplacés par rapport au chariot de guiage (12) dans la rainure longitudinale respective (56, 57) autour d'un axe longitudinal parallèle aux pistes de roulement (39, 40) et autour d'un axe transversal s'étendant transversalement à celui-ci, notamment à angle droit, avec autoajustage.

31. Guidage de palier à roulement linéaire selon l'une quelconque des revendications 13 à 30,
**caractérisé en ce que**
les éléments de piste de roulement individuels (14) sont sollicités avec une force de ressort dans la direction du rail de guidage (11) et sont pressés contre le rail de guidage (11).

32. Guidage de palier à roulement linéaire selon l'une quelconque des revendications 27 à 31,
**caractérisé en ce**
**qu'**entre les éléments de piste de roulement (14) dans la rigole latérale respective (54) et la rainure longitudinale respective (56, 57) du chariot de guidage (12) sont disposés des éléments cylindriques, par exemple tubulaires, servant d'éléments de support (66).

33. Guidage de palier à roulement linéaire selon la revendication 32,
**caractérisé en ce que**
les éléments de support (66) sont élastiques à ressort et retiennent les éléments de piste de roulement (14) et les précontraignent dans la direction du rail de guidage (11).

34. Guidage de palier à roulement linéaire selon l'une quelconque des revendications 13 à 33,
**caractérisé en ce que**
le chariot de guidage (12) présente, à l'intérieur de chaque rainure longitudinale (56, 57), une surface de support de courbure concave ou convexe à deux axes, qui est adaptée au côté arrière (31, 63) de courbure convexe ou concave des corps porteur (21) des éléments de piste de roulement (14), et qui est prévue pour recevoir celui-ci.

35. Guidage de palier à roulement linéaire selon les revendications 32 et 34,
**caractérisé en ce que**
les éléments de support (66) présentent, au moins sur une portion de la longueur, une surface de courbure convexe ou concave (63) à deux axes, qui coopère avec la surface de support (64) de forme correspondante de la rainure longitudinale respective (56, 57) pour assurer le support et le maintien axial.

36. Guidage de palier à roulement linéaire selon la revendication 35,
**caractérisé en ce que**
les corps porteurs (21) des éléments de piste de roulement (14) avec leur surface extérieure de courbure concave ou convexe s'appliquent et sont maintenus axialement sur la surface respective concave ou convexe de l'élément de support respectif (66).

37. Guidage de palier à roulement linéaire selon l'une quelconque des revendications 13 à 36,
**caractérisé en ce que**
les éléments de piste de roulement individuels (14) peuvent être fixés en position élastiquement sur le chariot de guidage (12) au moyen d'éléments de retenue élastiques (59, 60).

38. Guidage de palier à roulement linéaire selon la revendication 37,
**caractérisé en ce que**
les éléments de retenue (59, 60) sont formés à partir d'étrier élastiques qui sont maintenus à l'extrémité du chariot de guidage (12) sur celui-ci et qui agissent élastiquement, radialement et/ou axialement, avec leurs extrémités à suspension élastique, sur les éléments de piste de roulement (14).

39. Guidage de palier à roulement linéaire selon la revendication 37,
**caractérisé en ce que**
les éléments de retenue sont montés sur les éléments de piste de roulement (14) et viennent en prise lors du montage de ces derniers, de manière élastique dans des logements associés du chariot de guidage (12).
